# EUROPEAN PATENT APPLICATION

(11) **EP 0 679 557 A1**
(43) Date of publication of application: **02.11.1995**
(21) Application number: 94120486.9
(22) Date of filing: 23.12.1994
(51) Int. Cl.: B60R 21/32

(54) **Acceleration sensor**

(30) Priority: 22.04.1994 JP 84629/94
(71) Applicant: KABUSHIKI KAISHA TOKAI-RIKA-DENKI-SEISAKUSHO, Niwa Aichi-ken (JP)
(72) Inventor: Usui, Katsutoshi, c/o Kabushiki Kaisha Tokai-Rika, Ohguchi-cho, Niwa, Aichi-ken (JP); Koide, Teruhiko, c/o Kabushiki Kaisha Tokai-Rika, Ohguchi-cho, Niwa, Aichi-ken (JP); Teraoka, Fuminori, c/o Kabushiki Kaisha Tokai-Rika, Ohguchi-cho, Niwa, Aichi-ken (JP); Tajiri, Yuji, c/o Kabushiki Kaisha Tokai-Rika, Ohguchi-cho, Niwa, Aichi-ken (JP)
(74) Representative: Fuhlendorf, Jörn, Dipl.-Ing.

(57) **Abstract**

A small-sized acceleration sensor which senses a state of a sudden deceleration of a vehicle so as to actuate an actuator such as an air bag. The acceleration sensor comprises an ignition pin, an inertial mass body inertially moving from an original position when acceleration reaches a predetermined value, urging means for urging the ignition pin in a direction in which the ignition pin strikes a detonating material, and trigger means which prevents an urging force of the urging means from being applied to the ignition pin and which transmits the urging force of the urging means to the ignition pin during the movement of the inertial mass body. The ignition pin is disposed at a rear side of the inertial mass body in a direction opposite to the moving direction of the inertial mass body.

## Description

### BACKGROUND OF THE INVENTION

### FIELD OF THE INVENTION

The present invention relates to an acceleration sensor which senses a sudden deceleration of a vehicle so as to actuate an actuator such as an air bag.

### DESCRIPTION OF THE RELATED ART

Conventionally, there has been known an air bag device constructed in that an ignition pin for combusting a gas generating material contained in an inflator at the time of a rapid deceleration of the vehicle to inflate an air bag body is driven by a mechanical igniting sensor.

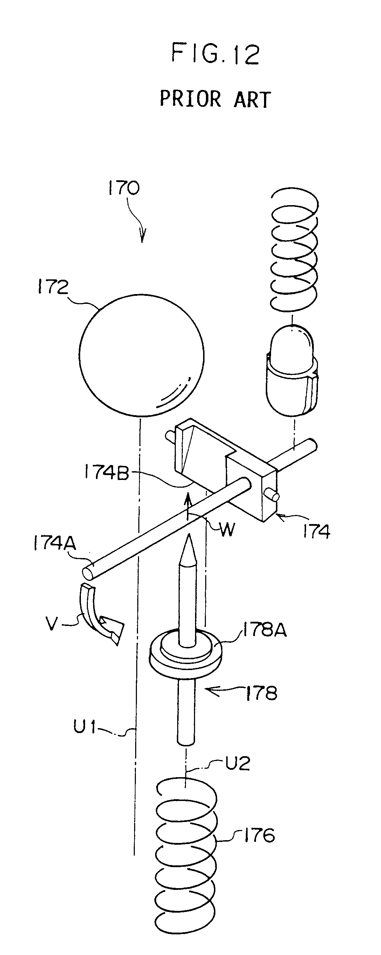

As shown in Fig. 12, an acceleration sensor 170 is constructed in that a drive shaft 174A of a trigger member 174 swings in the direction indicated by arrow V by a ball 172 serving as an inertial mass body which moves in accordance with a predetermined acceleration. Further, a flange portion 178A of an ignition pin 178 urged by a coil spring 176 in the direction indicated by arrow W engages with an engaging portion 174B of the trigger member 174. Accordingly, when the ball 172 moves in accordance with the predetermined acceleration so that the drive shaft 174A swings in the direction indicated by arrow V, the engaging portion 174B of the trigger member 174 swings together with the drive shaft 174A, and the engaging portion 174B is released from the state of engaging with the flange portion 178A of the ignition pin 178. As a result, the ignition pin 178 moves in the direction indicated by arrow W by an urging force of the coil spring 176 and strikes an unillustrated detonator so that the gas generating material combusts.

However, in the above-described acceleration sensor 170, it is necessary to maintain a locus of movement U1 of the ball 172 and a locus of movement U2 of the ignition pin 178 within a housing in a state of being arranged parallel to each other in the radial direction. For this reason, the acceleration sensor 170 is made large.

### SUMMARY OF THE INVENTION

In view of the above-described circumstances, it is an object of the present invention to provide a small-sized acceleration sensor.

An acceleration sensor according to the present invention comprises an ignition pin, an inertial mass body inertially moving from an original position when acceleration reaches a predetermined value, urging means for urging the ignition pin in a direction in which the ignition pin strikes a detonating material, and trigger means which prevents an urging force of the urging means from being applied to the ignition pin and which transmits the urging force of the urging means to the ignition pin during the movement of the inertial mass body, the ignition pin being disposed on a substantially same straight line of the moving direction of the inertial mass body and at a rear side of the inertial mass body in a direction opposite to the moving direction of the inertial mass body.

In the above-described acceleration sensor, it is preferable that an accommodating portion in which at least a portion of the ignition pin is accommodated is provided within the inertial mass body.

Further, in the above-described acceleration sensor, it is preferable that the ignition pin is provided with a guide member which guides the ignition pin in a direction in which the ignition pin strikes a detonating material.

Moreover, in the above-described acceleration sensor, it is also possible that a guide portion for guiding the inertial mass body in a predetermined direction be provided at a portion of the trigger means, which abuts the inertial mass body.

According to the acceleration sensor of the present invention, when an acceleration of a predetermined value or more is applied to the inertial mass body, the inertial mass body inertially moves from the original position and the trigger means operates by the inertial movement of the inertial mass body. When the trigger means operates, the urging force of urging means which has not been applied to the ignition pin by the trigger means before the trigger means operates, is transmitted to the ignition pin so that the ignition pin moves in the direction of striking the detonating material.

Here, the acceleration sensor of the present invention is constructed in that the ignition pin is disposed on a substantially same straight line of the moving direction of the inertial mass body and at a rear side of the inertial mass body in the direction opposite to the moving direction of the inertial mass body when acceleration reaches the predetermined value. For this reason, it is not necessary to maintain each locus of movement of the inertial mass body and the ignition pin within a housing in a state of being arranged parallel to each other in the radial direction, as in a conventional way. This makes it possible to reduce an outer diameter of the acceleration sensor so that the acceleration sensor can be made small.

Further, in the acceleration sensor of the present invention, at least a portion of the ignition pin is accommodated within the accommodating portion provided inside of the inertial mass body. Accordingly, as compared with the structure in which the inertial mass body and the ignition pin are disposed in such a manner as not to overlap each other, the overall length of the acceleration sensor can be shortened, and the acceleration sensor can be made even smaller.

Further, in the acceleration sensor of the present invention, the ignition pin is guided by the guide member provided in the ignition pin and moves in the direction of striking the detonating material. Accordingly, as compared with a structure in which the guide member is disposed at the side of a housing, the length of the housing can be shortened. As a result, the overall length of the acceleration sensor can be shortened, and the acceleration sensor can be made even smaller.

Moreover, according to the acceleration sensor of the present invention, when the inertial mass body inertially moves from the original position and abuts the trigger means, the inertial mass body can be guided in the predetermined direction by the guide portion formed at the portion of the trigger means, which abuts the inertial mass body. Accordingly, the moving direction of the inertial mass body is stabilized and a variation of a locus of movement of the trigger means due to a change of the moving direction of the inertial mass body is alleviated. For this reason, a space can be made small, which is formed to prevent the trigger means from being interfered with an other member due to the variation of the locus of movement of the trigger means, and the acceleration sensor can be made even smaller.

### BRIEF DESCRIPTION OF THE DRAWINGS

Fig. 1 is a side cross-sectional view illustrating an acceleration sensor according to a first embodiment of the present invention.

Fig. 2 is a cross-sectional view taken along the line 2 - 2 in Fig. 1.

Fig. 3 is an exploded perspective view illustrating the acceleration sensor according to the first embodiment of the present invention.

Fig. 4 is a side cross-sectional view illustrating an acceleration sensor according to a second embodiment of the present invention.

Fig. 5 is a cross-sectional view taken along the line 5 - 5 in Fig. 4.

Fig. 6 is a perspective view illustrating a trigger lever of the acceleration sensor according to the second embodiment.

Fig. 7 is a side cross-sectional view illustrating an acceleration sensor according to a third embodiment of the present invention.

Fig. 8 is a perspective view illustrating a moving guide of the acceleration sensor according to the third embodiment.

Fig. 9 is a perspective view illustrating fixed guides of the acceleration sensor according to the third embodiment.

Fig. 10 is a cross-sectional view taken along the line 10 - 10 in Fig. 7.

Fig. 11A is a perspective view illustrating an end portion of an arm of an acceleration sensor according to a fourth embodiment of the present invention; and Fig. 11B is a side cross-sectional view illustrating the end portion of the arm of the acceleration sensor according to the fourth embodiment.

Fig. 12 is an exploded perspective view illustrating a conventional acceleration sensor.

### DESCRIPTION OF THE PREFERRED EMBODIMENTS

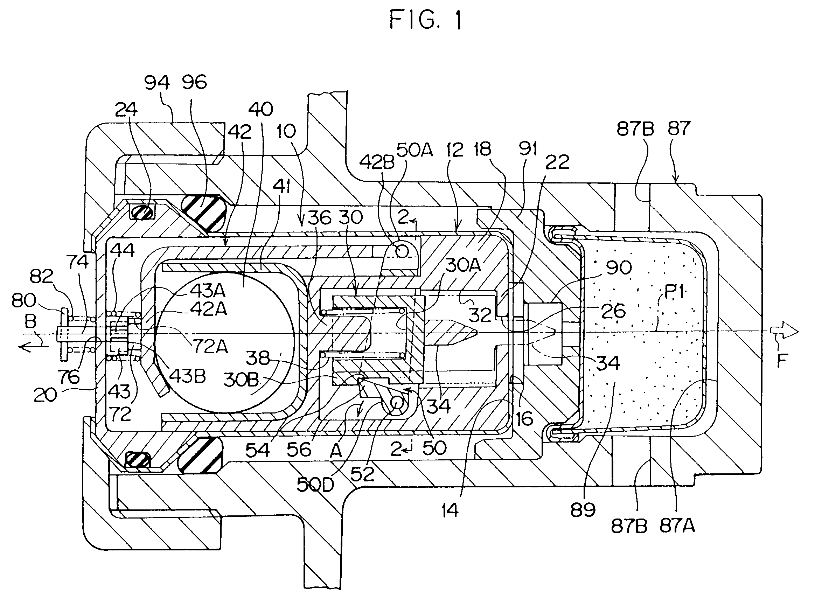

First, referring now to Fig. 1 through Fig. 3, a description will be given of an acceleration sensor 10 according to a first embodiment of the present invention.

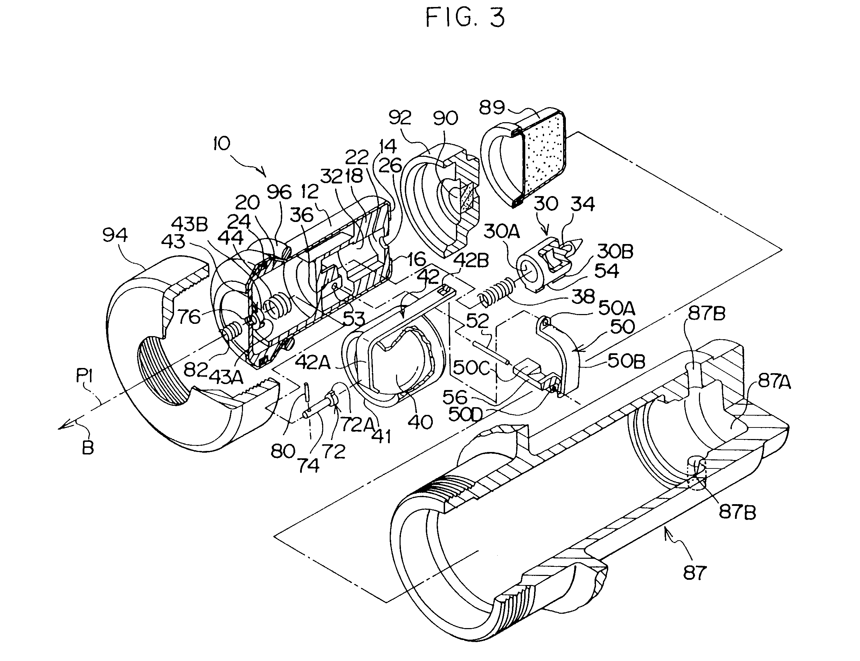

As shown in Fig. 3, the acceleration sensor 10 has a sensor cover 12. The sensor cover 12 is of a substantially cylindrical shape having a bottom wall 14 at one end of the sensor cover 12, and a through hole 16 is formed axially in the bottom wall 14. A body block 18 and a cover block 20 are disposed within the sensor cover 12. The body block 18 is formed into a substantially column-shaped block, and a bottom wall 22 of the body block 18 is connected and fixed to the bottom wall 14 of the sensor cover 12. Further, the cover block 20 is formed into a disk-shape, and an O ring 24 is disposed between the sensor cover 12 and the cover block 20 so that an opening between the sensor cover 12 and the cover block 20 is reliably sealed. It should be noted that the above-described body block 18 may be formed from a plurality of divided sections for reasons at the time of manufacturing or assembling the body block 18.

A through hole 26 is formed in the bottom wall 22 of the body block 18 so as to be coaxial with the through hole 16 and oppose an ignition pin 30 which will be described below.

The ignition pin 30 is disposed within the body block 18 so as to be coaxial with an axial line P1 of the acceleration sensor 10. The position of the ignition pin 30 may be deviated from the axial line P1 of the acceleration sensor 10. This ignition pin 30 is disposed, in a state of holding a holder 36, on a substantially same straight line of the moving direction of an inertial mass body 40 and at a rear side of the inertial mass body 40 described below, in a direction opposite to the direction (indicated by arrow B) in which the inertial mass body 40 moves during acceleration of a vehicle. The ignition pin 30 is of a substantially columnar configuration and is disposed so as to be slidable within a guide groove 32 formed in the body block 18. Accordingly, the ignition pin 30 can move along the axial line P1 of the acceleration sensor 10.

As shown in Fig. 1, the ignition pin 30 has a pointed portion 34 which projects therefrom toward the side corresponding to the bottom wall 22 of the body block 18. The pointed portion 34 projects out from the above-described through hole 26 formed in the bottom wall 22 when the ignition pin 30 has moved toward the bottom wall 22 of the body block 18 as far as it can go (i.e., the state indicated by the imaginary line in Fig. 1).

On the other hand, a concave portion 30A whose cross-sectional configuration is circular, is formed in the ignition pin 30 along the axial line P1 from another end portion of the ignition pin 30, which is opposite to the above-described end portion corresponding to the bottom wall 2. A column-shaped holder 36 formed in the body block 18 is inserted in the concave portion 30A. Interposed between the holder 36 and a bottom portion of the concave portion 30A is a firing spring 38 which serves as an urging means for urging the ignition pin 30 in a direction in which the ignition pin 30 strikes a detonator 90 as a detonating material. The firing spring 38 constantly urges the ignition pin 30 in the direction of the bottom wall 22 (through hole 26), i.e., the direction indicated by arrow F. It should be noted that the detonating material is not limited to the detonator 90.

The inertial mass body 40 is disposed coaxially with the axial line P1 of the acceleration sensor 10. The position of the inertial mass body 40 may be deviated from the axial line P1 of the acceleration sensor 10. Further, the inertial mass body 40 is formed as a ball and is held in such a manner as to be movable within a case 41. When acceleration reaches a predetermined value, the inertial mass body 40 inertially moves from an original position (indicated by the solid line in Fig. 1) to the direction indicated by arrow B.

Further, the case 41 is disposed within the body block 18 along the axial line P1 and is formed as a cylinder having a bottom portion on the side of the holder 36.

One end portion 42A of the arm 42 which forms a portion of a trigger means abuts an outer periphery of the inertial mass body 40. A bias spring 44 is disposed between the end portion 42A and the cover block 20 and constantly urges the inertial mass body 40 toward the bottom wall 22 so as to hold it at an original position. When a predetermined acceleration is applied to the acceleration sensor 10, the inertial mass body 40 moves to the left side of the paper of Fig. 1 (i.e., the direction indicated by arrow B) against the urging force of the bias spring 44 by an inertial force of the inertial mass body 40. Further, a means for holding the inertial mass body 40 at the original position is not limited to the bias spring 44, and it may be possible to support the inertial mass body 40 by an inclined surface so as to hold the inertial mass body 40 at the original position by the gravity thereof.

Another end portion of the arm 42 extends toward the bottom wall 22 at an outer side of the case 41 at an upper portion of the inertial mass body 40 (i.e., the upper side of the paper of Fig. 1), and an upper end portion 50A of a trigger lever 50 which forms the other portion of the trigger means is rotatably engaged with a leading end portion 42B of the arm 42.

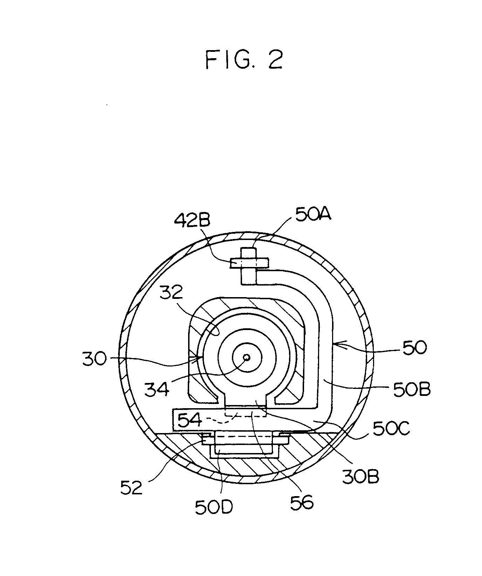

As shown in Fig. 2, the trigger lever 50 is formed of a bent plate material with a substantially U-shaped cross-sectional configuration and is constructed in that an intermediate portion 50B contiguous to an upper end portion 50A extends downward along an outer side of the ignition pin 30 and a lower portion 50C is formed as a flat plate.

As shown in Fig. 1, a bearing portion 50D is formed on a bottom surface of the lower portion 50C of the trigger lever 50. The bearing portion 50D is maintained at a shaft-supporting hole 53 (see Fig. 3) formed in the body block 18 by a shaft 52 inserted in the bearing portion 50D, so that the trigger lever 50 can rotate counterclockwise (i.e., the direction indicated by arrow A) around the shaft 52 from the position illustrated in Fig. 1. Further, the upper surface of the lower portion 50C of the trigger lever 50 is formed as an inclined surface constructed in that the upper surface thereof disposed on the side of the inertial mass body 40 is higher than that on an opposite side. An edge portion of the lower portion 50C on the side of the inertial mass body 40 forms an engaging pawl portion 56.

As shown in Fig. 2, a block-shaped convex portion 30B is formed at a lower portion of the ignition pin 30 along an axial direction thereof. An engaging concave portion 54 is formed at an intermediate portion of the convex portion 30B in the axial direction, so that the engaging pawl portion 56 engages the engaging concave portion 54.

Returning to Fig. 1, in the state in which the engaging pawl portion 56 engages the engaging concave portion 54, the ignition pin 30 urged by the firing spring 38 is held at the position where the pointed portion 34 is separated from the through hole 26 (i.e., the position indicated by the solid line in Fig. 1). Further, the engaging pawl portion 56 and the engaging concave portion 54 are released from the state of engaging each other when the trigger lever 50 rotates around the shaft 52 in the direction indicated by arrow A.

As shown in Fig. 3, a cylindrical projecting portion 43 is formed, in such a manner as to face the arm 42, at a portion of the cover block 20 opposing the end portion 42A of the arm 42. A notch 43A is formed on the side of the arm 42 at the outer peripheral portion of the projecting portion 43. A release lever 72 is nipped between an end portion 43B of the projecting portion 43 at the side of the arm 42 and the end portion 42A of the arm 42. The release lever 72 is formed into a columnar configuration and has an engaging piece 72A fittable to the notch 43A, at the outer peripheral portion of the release lever 72.

The release lever 72 is supported by one end portion of the shaft 74 so as to rotate integrally with the shaft 74. Further, the shaft 74 penetrates through the projecting portion 43 and a supporting hole 76 of the cover block 20. A pin 80 is mounted to a leading end portion of the shaft 74 projecting out from the supporting hole 76 of the cover block 20 so that the shaft 74, i.e., the release lever 72, can rotate from the outside.

A helical spring 82 is provided between the pin 80 and the cover block 20 and urges the shaft 74 in the direction indicated by arrow B. Accordingly, when the shaft 74 rotates and the engaging piece 72A of the release lever 72 is engaged with the notch 43A of the projecting portion 43, the release lever 72 moves in the direction indicated by arrow B and the release lever 72 is separated from the end portion 42A of the arm 42. For this reason, the inertial mass body 40 and the arm 42 can both move in the direction indicated by arrow B.

The acceleration sensor 10 constructed in the above-described manner is inserted in a cylindrical case 87 and is mounted to, for example, a gas generator for a pretensioner (whose detailed construction is not shown). The gas generator contains a gas generating material, and an enhancer 89 is accommodated within the cylindrical case 87 surrounded by the gas generating material in the vicinity of a bottom portion 87A of the cylindrical case 87. Further, through hole 87B is formed in an outer peripheral portion of the cylindrical case 87 in the vicinity of the bottom portion 87A thereof, so that the gas generating material is ignited by the enhancer 89 via the through hole 87B.

A detonator 90 is provided between the acceleration sensor 10 and the enhancer 89 within the cylindrical case 87. The detonator 90 is fixed to a detonator piece 92 held between the enhancer 89 and the bottom wall 14 of the sensor cover 12. Further, in the state in which the acceleration sensor 10 is mounted to the gas generator, the detonator 90 faces the through hole 26 formed in the bottom wall 22 of the above-described body block 18. In this state, the acceleration sensor 10 is secured by a support ring 94. An O ring 96 is disposed between respective portions where the sensor cover 12 and the gas generator are mounted, so that an opening between the sensor cover 12 and the gas generator is reliably sealed. Accordingly, in the state in which the acceleration sensor 10 is mounted to the gas generator, the pointed portion 34 of the ignition pin 30, which can project from the through hole 26 formed in the bottom wall 22 of the body block 18, can strike the detonator 90.

Next, an operation of the first embodiment will be described.

In the acceleration sensor 10 of the present embodiment constructed in the above-described manner, usually, as indicated by the solid line in Fig. 1, the ignition pin 30 is separated from the detonator 90 (the through hole 26 of the body block 18) against the urging force of the firing spring 38, and the trigger lever 50 holds the ignition pin 30 at the position indicated by the solid line in Fig. 1 in the state in which the engaging pawl portion 56 engages the engaging concave portion 54 of the ignition pin 30.

Further, the inertial mass body 40 and the arm 42 are both moved to the position nearest the bottom wall 22 by the bias spring 44 so as to prevent the trigger lever 50 from rotating and to maintain the state in which the trigger lever 50 holds the ignition pin 30.

Moreover, since the helical spring 82 is used to cause the engaging piece 72A of the release lever 72 urged in the direction indicated by arrow B to abut the end portion 43B of the projecting portion 43 and to cause the release lever 72 to be nipped between the projecting portion 43 of the release lever 72 and the end portion 42A of the arm 42, movement of the inertial mass body 40 is prevented.

In this case, when the shaft 74 is rotated around an axis and the engaging piece 72A of the release lever 72 is engaged with the notch 43A of the projecting portion 43, the release lever 72 moves in the direction indicated by arrow B so that the inertial mass body 40 and the arm 42 are both brought into a state of being movable in the direction indicated by arrow B. As a result, the acceleration sensor 10 is set to be operatable.

When a rapid acceleration acts on the acceleration sensor 10 in this state, the inertial mass body 40 inertially moves in the direction indicated by arrow B in Fig. 1. Then, the arm 42 moves together with the inertial mass body 40 in the direction indicated by arrow B, which causes the trigger lever 50 engaged with the leading end portion 42B of the arm 42 to move in the direction indicated by arrow A.

As a result, the engaging pawl portion 56 of the trigger lever 50 is disengaged from the engaging concave portion 54 of the ignition pin 30 so as to release the ignition pin 30 from the state of being held. As a result, the ignition pin 30 moves in the direction of the bottom wall 22 by the urging force of the firing spring 38 and the pointed portion 34 projects out from the through hole 26 to strike and ignite the detonator 90. Then, the enhancer 89 is ignited, and subsequently, the gas generating material is also ignited and combusts, so that, for example, a pretensioner, is actuated.

The acceleration sensor 10 is constructed in that, as shown in Fig. 1, the ignition pin 30 is disposed on a substantially same straight line of the moving direction of the inertial mass body 40 and at a rear side of the inertial mass body 40 in the direction opposite to the moving direction of the inertial mass body 40. Accordingly, it is not necessary to maintain each locus of movement of the inertial mass body and the ignition pin within a housing in a state of being arranged parallel to each other in the radial direction, as in a conventional way. This makes it possible to reduce an outer diameter of the acceleration sensor 10 so that the acceleration sensor 10 can be made small.

In this embodiment, the structure in which the acceleration sensor 10 is used to operate a pretensioner was described. However, the present invention is not limited to the same, and the acceleration sensor 10 may be used for other apparatuses which operate when a rapid acceleration acts on the acceleration sensor 10, for example, an air bag apparatus.

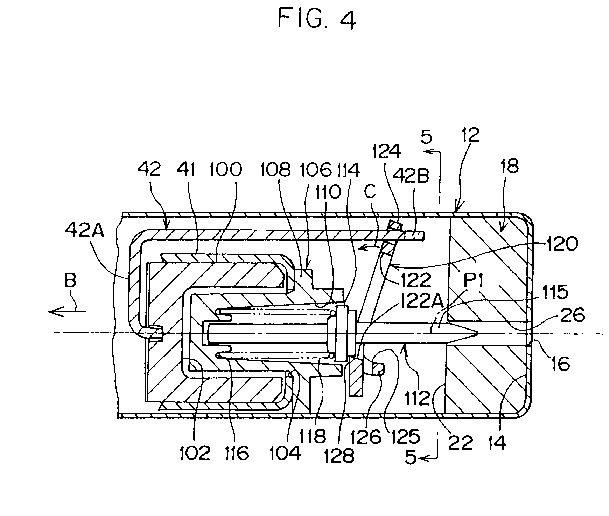

Next, an acceleration sensor 10 according to a second embodiment of the present invention will be described in accordance with Fig. 4 through Fig. 6.

It should be noted that the same members as those of the first embodiment will be denoted by the same reference numerals, and a description thereof will be omitted.

As shown in Fig. 4, an inertial mass body 100 of this embodiment has a columnar configuration, and a concave portion 102 whose cross-sectional configuration is circular, is formed along an axial line of the acceleration sensor 10 so as to face the bottom wall 14 of the sensor cover 12. Further, a through hole 104 is formed on an axial line of a case 41 at the bottom portion of the case 41. The hole diameter of the through hole 104 is equal to that of the concave portion 102. A holder 106 is inserted in the through hole 104 and the concave portion 102. The holder 106 is formed into a columnar configuration and a flange portion 108 formed at an outer peripheral portion of the holder 106 engages an outer surface of a bottom wall of the case 41.

A concave portion 110 whose cross-sectional configuration is circular is formed along the axial line of the acceleration sensor 10 from an end portion of the holder 106 at the side of the bottom wall 14 of the holder 106. A columnar ignition pin 112 is accommodated within the concave portion 110. An ignition pin 112 is disposed on a substantially same straight line of the moving direction of the inertial mass body 100 and at a rear side of the inertial mass body 100 in a direction opposite to the direction (indicated by arrow B) in which the inertial mass body 100 moves when acceleration reaches a predetermined value. A flange portion 114 is formed at an outer periphery of the ignition pin 112. Further, a pointed portion 115 projects from the flange portion 114 of the ignition pin 112 toward the bottom wall 22 of the body block 18. The pointed portion 115 projects out from the above-described through hole 26 formed in the bottom wall 22 in the state in which the ignition pin 112 moves toward the bottom wall 22 of the body block 18 as far as it can go.

Further, a firing spring 118 is disposed between the flange portion 114 and a ring-shaped groove 116 formed in the concave portion 110 and constantly urges the ignition pin 112 toward the bottom wall 22 (the through hole 26). An upper end portion of a trigger lever 120 is rotatably engaged with the leading end portion 42B of the arm 42.

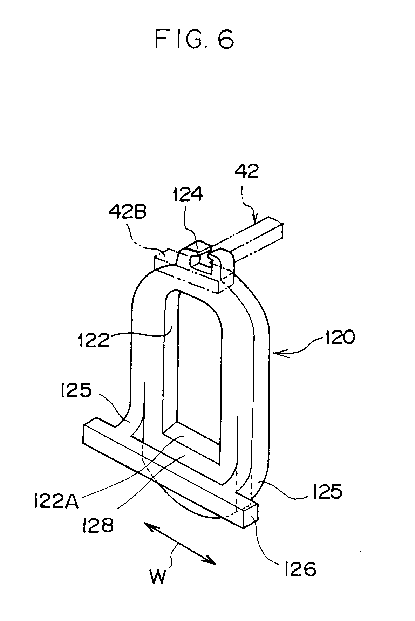

As shown in Fig. 6, the trigger lever 120 is formed by a plate material in which a through hole 122 is formed at a central portion thereof. An engaging portion 124 for engaging with the leading end portion 42B of the arm 42 projects from an upper end portion of the trigger lever 120. Both end portions, in a crosswise direction of the trigger lever 120 (i.e., the direction indicated by arrow W), of a lower portion of the trigger lever 120 bends toward the bottom wall 22, as shown in Fig. 4, to form curved portions 125.

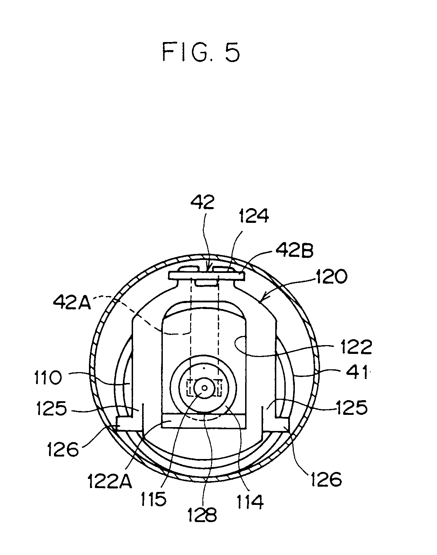

As shown in Fig. 5, each convex portion 126 is formed at respective leading ends of the curved portions 125 so as to face outside in the crosswise direction of the trigger lever 120. These convex portions 126 are held by supporting holes (not shown) formed in the body block 18, so that the trigger lever 120 can rotate counterclockwise (i.e., the direction indicated by arrow C) about the convex portions 126 from the state illustrated in Fig. 4. Further, a lower surface 122A at an inner periphery of the through hole 122 of the trigger lever 120 is an inclined surface constructed in that a portion of the lower surface 122A on the side of the inertial mass body 100 is higher than that on the opposite side. Further, a lower edge portion of the trigger lever 120 on the side of the inertial mass body 100 forms an engaging portion 128.

The engaging portion 128 engages the flange portion 114 of the ignition pin 112. In a state in which the engaging portion 128 engages the flange portion 114 of the ignition pin 112, the ignition pin 112 urged by the firing spring 118 is held at the position where the pointed portion 115 is separated from the through hole 26. Further, the engaging portion 128 and the flange portion 114 of the ignition pin 112 are released from the state of engaging each other when the trigger lever 120 rotates about the convex portions 126 in the direction indicated by arrow C in Fig. 4.

Next, an operation of the second embodiment will be described.

When a rapid acceleration acts on the acceleration sensor 10, the inertial mass body 100 inertially moves to the left side of the paper of Fig. 4 (i.e., the direction indicated by arrow B). Then, the arm 42 moves in the direction of arrow B together with the inertial mass body 100, which causes the trigger lever 120 engaged with the leading end portion 42B of the arm 42 to move in the direction indicated by arrow C.

As a result, the engaging portion 128 of the trigger lever 120 is separated from the flange portion 114 of the ignition pin 112 so that the ignition pin 112 is released from the state of being held by the trigger lever 120. Then, the ignition pin 112 moves to the bottom wall 22 by the urging force of the firing spring 118 so that the pointed portion 115 projects out from the through hole 26.

The acceleration sensor 10 is constructed in that, as shown in Fig. 4, the portion of the ignition pin 112 excluding the pointed portion 115 is accommodated within the concave portion 102 formed inside of the inertial mass body 110. As a result, as compared with the structure in which the inertial mass body and the ignition pin are disposed in such a manner as not to overlap each other, the overall length of the acceleration sensor 10 can be shortened, and the acceleration sensor 10 can be made even smaller.

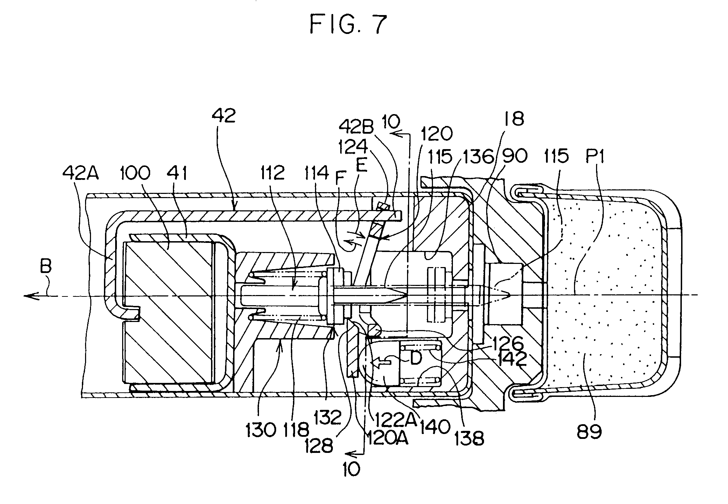

Next, a description will be given of an acceleration sensor 10 according to a third embodiment of the present invention in accordance with Fig. 7 through Fig. 10.

It should be noted that the same members as those of the second embodiment will be denoted by the same reference numerals, and a description thereof will be omitted.

As shown in Fig. 7, a holder 130 of this embodiment extends only toward the side of the bottom wall 14. Further, provided between the flange portion 114 of the ignition pin 112 and the firing spring 118 is a moving guide 132 serving as a guide member.

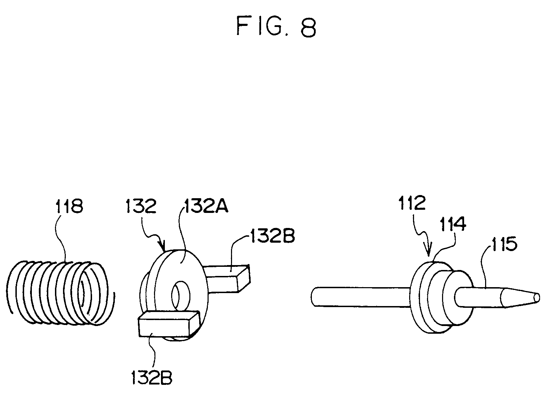

As shown in Fig. 8, the moving guide 132 is formed by a ring-shaped main body 132A and a pair of guide portions 132B each of which longitudinal direction is disposed along the axial line of the ignition pin 112. The pair of guide portions 132B are respectively fixed to an outer periphery of the main body 132A. The ignition pin 112 is inserted in the main body 132A whose outer diameter is equal to that of the flange portion 114 of the ignition pin 112. The pair of guide portions 132B are provided at locations on a line extended from the diameter of the outer peripheral portion of the main body 132A.

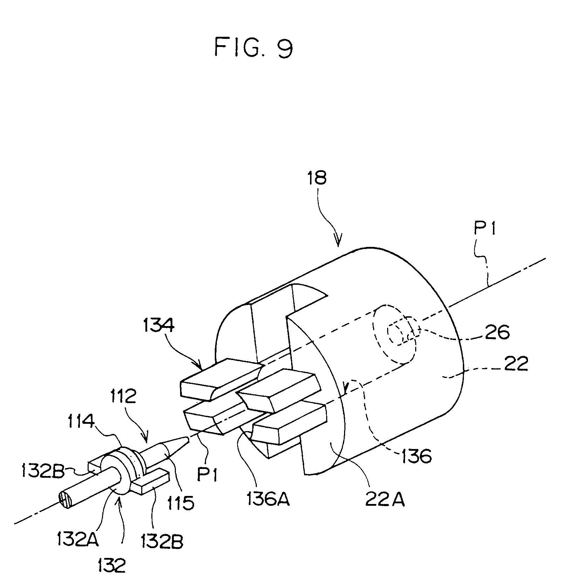

As shown in Fig. 9, four fixed guides 134 respectively project from a wall 22A of the body block 18 at an opposite side of the bottom wall 22 along the axial line of the ignition pin 112 so as to be arranged around the axial line thereof.

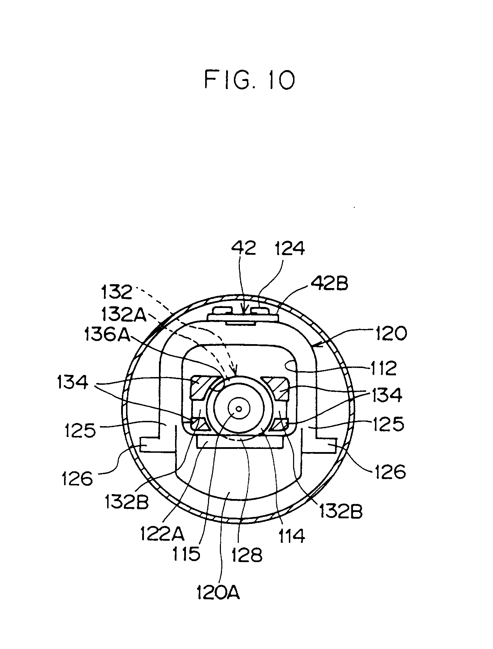

Further, as shown in Fig. 10, the guide portion 132B of the moving guide 132 is inserted between the adjacent two fixed guides 132. In addition, a circular hole 136A for guiding the flange portion 114 and the main body 132A is formed at an intermediate portion of these four fixed guides 134, and has an inner diameter concentric with the concave portion 136.

As a result, as shown in Fig. 9, the ignition pin 112 can move without being deviated from the axial line P1 by the fixed guides 134 and the moving guides 132. Further, since the concave portion 136 whose cross-sectional configuration is circular is formed at a center portion of the wall 22A of the body block 18, the ignition pin 112 enters the concave portion 136 and the pointed portion 115 projects out from the through hole 26.

Returning to Fig. 7, a concave portion 138 whose diameter is smaller than that of the above-described concave portion 136 is formed in the body block 18 outside of the concave portion 136 along the concave portion 136. A pin 140 is inserted into the concave portion 138. A bias spring 142 is disposed between a bottom portion of the concave portion 138 and the pin 140 so as to constantly urges the pin 140 toward the left side of the paper of Fig. 7 (i.e., the direction indicated by arrow D). Further, a leading end portion of the pin 140 abuts a lower portion 120A of the trigger lever 120 so as to urge the trigger lever 120 in a clockwise direction in Fig. 7 (i.e., the direction indicated by arrow E). When the predetermined acceleration acts on the acceleration sensor 10, the inertial mass body 100 inertially moves toward the left side of the paper of Fig. 7 (i.e., the direction indicated by arrow B) against the urging force of the bias spring 142, so that the trigger lever 120 can swing in a counterclockwise direction in Fig. 7 (i.e., the direction indicated by arrow F).

Next, an operation of the third embodiment will be described.

When a rapid acceleration acts on the acceleration sensor 10, the inertial mass body 100 inertially moves toward the left side of the paper of Fig. 7 (i.e., the direction indicated by arrow B). In this case, the arm 42 moves integrally with the inertial mass body 100 in the direction of arrow B. Then, the trigger lever 120 engaged with the leading end portion 42B of the arm 42 swings in the direction indicated by arrow F against the urging force of the bias spring 142.

As a result, the engaging portion 128 of the trigger lever 120 is separated from the flange portion 114 of the ignition pin 112 so that the ignition pin 112 is released from the state of being held by the trigger lever 120. Then, the ignition pin 112 moves in the direction of the bottom wall 22 by the urging force of the firing spring 118 and the pointed portion 115 projects out from the through hole 26.

The acceleration sensor 10 of this embodiment is constructed in that, in place of a guide member conventionally provided at the side of a housing, each of the guide portions 132B of the moving guide 132 mounted to the ignition pin 112 is inserted between the adjacent two fixed guides 134 so that the ignition pin 112 is guided by the fixed guides 134 and the moving guide 132, as shown in Fig. 9. Accordingly, the guide groove 32 shown in Fig. 1 becomes unnecessary, and the length of the through hole 26 shown in Fig. 4 is shortened. As a result, the acceleration sensor 10 can be shortened in length so as to be made even smaller.

In this embodiment, the inertial mass body 100 is formed into a columnar configuration. However, it may also be formed as a ball.

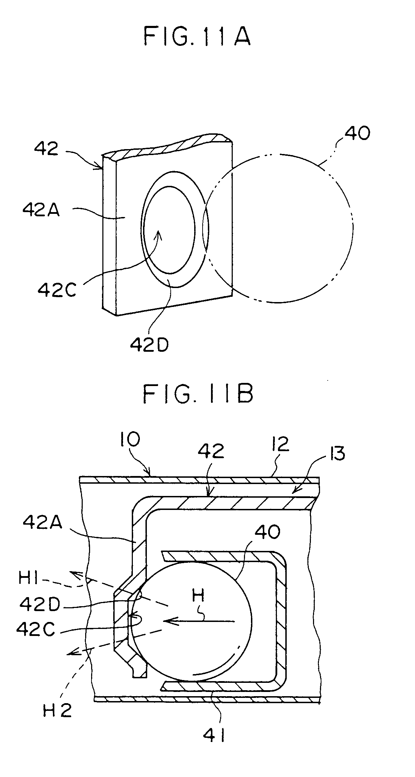

Next, a description of a fourth embodiment of the present invention will be given in accordance with Figs. 11A and 11B.

It should be noted that the same members as those of the first embodiment will be denoted by the same reference numerals, and a description thereof will be omitted.

As shown in Fig. 11A, a guide portion 42C is formed at an end portion 42A of the arm 42, in which the end portion 42A and the inertial mass body 40 abut each other.

Further, as shown in Fig. 11B, the guide portion 42C is caved in into the shape of disk at an opposite side of the inertial mass body 40. An outer peripheral portion 42D of the guide portion 42C is tapered.

Accordingly, in this embodiment, when the inertial mass body 40 inertially moves along an axial line of the case 41 from the original position toward the left side of the paper of Fig. 11B (i.e., the direction indicated by arrow H) so as to abut one end portion 42A of the arm 42, the inertial mass body 40 slides on an outer peripheral portion 42D of the guide portion 42C formed at one end portion 42A of the arm 42 and is guided in a direction along the axial line of the case 41, i.e., the direction of arrow H.

Accordingly, it is possible to prevent the inertial mass body 40 from moving in a direction deviated from the axial line of the case 41, i.e., a direction indicated by the broken line H1 or a direction indicated by the broken line H2 in Fig. 11B. As a result, the moving direction of the inertial mass body 40 is stabilized and a variation of a locus of movement of the arm 42 due to a change of the moving direction of the inertial mass body 40 is alleviated. For this reason, a space 13 can be made small, which is formed to prevent the arm 42 from being interfered with the sensor cover 12 due to the variation of the locus of movement of the arm 42, and the acceleration sensor 10 can be made even small.

Although, in this embodiment, the guide portion 42C is formed as a disk, it may also be formed into a circular hole in which a portion of the inertial mass body 40 can be inserted.

As described above, the acceleration sensor according to the present invention has prominent effects described below.

Since the acceleration sensor of the present invention comprises an inertial mass body which inertially moves from an original position when acceleration reaches a predetermined value or more, an ignition pin disposed at a rear side of the inertial mass body in the direction opposite to the moving direction of the inertial mass body, urging means for urging the ignition pin in a direction in which the ignition pin strikes a detonating material, and trigger means which prevents an urging force of the urging means from being applied to the ignition pin and which transmits the urging force of the urging means to the ignition pin during the movement of the inertial mass body, it has an excellent effect in that the acceleration sensor can be made small.

The acceleration sensor of the present invention is constructed in that an accommodating portion in which at least a portion of the ignition pin is accommodated is provided within the inertial mass body, which provides an excellent effect in that the acceleration sensor can be made small.

Further, in the acceleration sensor of the present invention, the ignition pin is provided with a guide member for guiding the ignition pin in a direction in which the ignition pin strikes the detonating material, which provides an excellent effect in that the acceleration sensor can be made even smaller.

Still further, in the acceleration sensor of the present invention, a guide portion for guiding the inertial mass body in a predetermined direction is provided at a portion of the trigger means, which abuts the inertial mass body. As a result, the acceleration sensor can be made even smaller.

## Claims

1. An acceleration sensor comprising:
an ignition pin;
an inertial mass body inertially moving from an original position when acceleration reaches a predetermined value;
urging means for urging said ignition pin in a direction in which said ignition pin strikes a detonating material; and
trigger means which prevents an urging force of said urging means from being applied to said ignition pin and which transmits the urging force of said urging means to said ignition pin during the movement of said inertial mass body,
wherein said ignition pin is disposed on a substantially same straight line of the moving direction of said inertial mass body and at a rear side of said inertial mass body in a direction opposite to the moving direction of said inertial mass body.

2. An acceleration sensor according to claim 1, wherein an accommodating portion in which at least a portion of said ignition pin is accommodated is provided inside of said inertial mass body.

3. An acceleration sensor according to claim 2, wherein said inertial mass body is formed into a substantially columnar configuration and has a concave portion on an end surface thereof, which faces said ignition pin, and said ignition pin formed as a substantially columnar configuration is accommodated in the concave portion.

4. An acceleration sensor according to claim 1, wherein said ignition pin is provided with a guide member for guiding said ignition pin in a direction in which said ignition pin strikes a detonating material.

5. An acceleration sensor according to claim 4, wherein said guide member of said ignition pin includes projecting portions which project from both sides of said ignition pin and the projecting portions are guided by each groove portion provided in a body block which said ignition pin enters.

6. An acceleration sensor according to claim 1, wherein a guide portion for guiding said inertial mass body in a predetermined direction is provided at a portion of said trigger means, which abuts said inertial mass body.

7. An acceleration sensor according to claim 6, wherein said guide portion is formed into a disk-shaped concave portion on a surface of said trigger means, which faces said inertial mass body, and said inertial mass body formed into a shape of ball is guided by the disk-shaped concave portion.
